# EUROPEAN PATENT SPECIFICATION

(11) **EP 4 672 976 B1**
(45) Date of publication and mention of the grant of the patent: **02.12.2026**
(21) Application number: 24706446.2
(22) Date of filing: 22.02.2024
(51) Int. Cl.: A23G 9/38, A23L 33/185, A23G 9/42

(54) **PLANT-BASED FROZEN CONFECTION**
GEFRORENE SÜSSWARE AUF PFLANZLICHER BASIS
CONFISERIE CONGELÉE À BASE DE PLANTES

(30) Priority: 02.03.2023 EP 23159606
(43) Date of publication of application: 07.01.2026
(73) Proprietor: MAGNUM IP HOLDINGS B.V., 1017 BM Amsterdam (NL)
(72) Inventor: ROSSETTI, Damiano, 6708 WH Wageningen (NL); ROSSELL, Colleen, Ann, 6708 WH Wageningen (NL); KOSKINIEMI, Craig, Benjamin, 6708 WH Wageningen (NL); TELFORD, Julia, Helen, 6708 WH Wageningen (NL)
(74) Representative: Potter Clarkson
(86) International application number: PCT/EP2024/054583
(87) International publication number: WO 2024/179926

(56) References cited:
- WO-A1-2022/184348
- WO-A1-2022/188959
- US-A1- 2017 105 428
- US-A1- 2018 160 703
- US-A1- 2018 184 684
- US-A1- 2022 279 811
- US-A1- 2022 287 324
- US-A1- 2022 322 720

## Description

### Field of the invention

The invention relates to plant-based frozen confections, in particular to the use of specific blends of plant-based proteins in plant-based frozen confections.

### Background of the invention

Plant-based foods are a growing consumer trend, which is thought to be driven by increasing health and environmental consciousness. As a result, there is currently an increased consumer demand for frozen confections which are not based on dairy ingredients, and instead use plant-based alternatives.

Frozen confections where some or all of the dairy ingredients have been replaced with plant-based ingredients are commercially available. For instance, pulse protein (such as soy protein or pea protein) is becoming more widely used in frozen confections. However, the flavour and texture of frozen confections formulated with certain pulse proteins is still unappealing to some consumers. In particular, their widespread acceptance is hindered by issues around their taste, since pulse proteins tend to have an inherent taste that formulators must mask in order to create a neutral product base. In addition, consumers want frozen confections that are dairy-free, but with the creamy mouthfeel and texture of regular ice cream.

The molecular structures of plant proteins are very different from those of dairy proteins, and a number of technical challenges may occur when formulating plant-based frozen confections. One such challenge is maintaining a suitable mix viscosity over time, since the difference in protein structures tends to mean that the viscosity is higher in plant-based premixes than in dairy premixes - especially after ageing of the premixes. Another challenge relates to texture and mouthfeel, since milk proteins stabilise the partial coalescence of the fat phase and maintain small air bubbles in frozen confections.

Therefore, there remains a need for improved formulations for plant-based frozen confections which overcome one or more of the drawbacks associated with the current formulations.

US 2018/184684 A1 discusses a frozen confection which contains low amounts of protein and which minimizes ingredients of animal origin, such as milk ingredients.

US 2022/279811 A1 discusses plant-based frozen confections, in particular the use of specific blends of plant-based proteins.

US 2022/322720 A1 discusses plant-based nutritional compositions that are high In protein, high in fiber and low in calories.

### Summary of the invention

The invention is defined by the claims.

The present invention relates to a plant-based frozen confection comprising:
- fat in an amount of 1 to 15 wt%;
- sugars in an amount of 10 to 30 wt%;
- solids from oat material in an amount of 0.5 to 12 wt%; and
- plant protein in an amount of 0.4 to 10 wt%,

wherein the oat material comprises one or more of: oat protein (***P3***), fat, carbohydrate, and/or fibre; and
wherein the plant protein comprises pea protein **(*P1*)** and fava bean protein (***P2***) in a weight ratio **(*P1 : P2***) of 2:1 to 1:2.

### Detailed description of the invention

The present invention relates to a plant-based frozen confection. As used herein the term frozen confection means a confection intended for consumption in the frozen state (i.e. where the temperature of the confection is less than 0°C, and preferably where the confection comprises significant amounts of ice). Definitions of various terms and techniques used in frozen confection manufacture are found in Ice Cream by H. Douglas Goff and Richard W. Hartel (2013, 7^{th} Edition, ISBN 978-1-4614-6096-1).

As used herein the term plant-based means that the frozen confection is formulated primarily from plant-derived ingredients. Nevertheless, it will be appreciated that the plant-based frozen confection may be fortified with vitamins and/or minerals or flavoured with ingredients (such as honey) which are not strictly speaking derived from plants. Preferably at least 98% by dry weight of the ingredients are derived from plants, more preferably at least 99%, at least 99.5%, at least 99.9%, most preferably 100% by dry weight of the ingredients are derived from plants. In particular, it is preferred that the frozen confection is essentially free of animal-derived ingredients, and thus comprises animal-derived ingredients in an amount of less than 0.1 wt%, preferably less than 0.05 wt%, more preferably less than 0.01 wt%.

The frozen confection comprises plant protein in an amount of 0.4 to 10 wt%. Since high levels of plant protein are associated with undesirable mouthfeel characteristics (such as grittiness) and/or flavour off-notes, it is preferred that the frozen confection comprises the plant protein in an amount of 8 wt% or less, 6 wt% or less, 5 wt% or less, or even 4 wt% or less. The frozen confection preferably comprises the plant protein in an amount of at least 0.45 wt%, at least 0.5 wt%, at least 0.55 wt%, or even at least 0.6 wt%. Most preferably, the frozen confection comprises the plant protein in an amount of 0.6 wt% to 2.5 wt%, or even 0.6 wt% to 2 wt%.

The plant protein comprises a first plant protein (***P1***) and a second plant protein (***P2***) in a weight ratio (***P1** : **P2***) of 2:1 to 1:2. The first plant protein **(*P1*)** is pea protein, and the second plant protein (***P2***) is fava bean protein. As such, both the first and second plant proteins are pulse proteins.

The combination of the first and second plant proteins has advantages over the use of either protein alone. In particular, such a combination is thought to produce a frozen confection having a good microstructure and acceptable organoleptic properties, whilst maintaining a suitable mix viscosity to allow for factory production.

The weight ratio of pea protein to fava bean protein (***P1 : P2***) is 2:1 to 1:2. Preferably the weight ratio of pea protein to fava bean protein (***P1*** : ***P*2**) is 2:1 to 2:3, 2:1 to 5:6, 2:1 to 1:1, 3:2 to 1:2, 3:2 to 2:3, 3:2 to 5:6,3:2 to 1:1, 6:5 to 1:2, 6:5 to 2:3, 6:5 to 5:6, 6:5 to 1:1, 1:1 to 1:2, 1:1 to 2:3, or even 1:1 to 5:6.

The frozen confection preferably comprises pea protein in an amount of at least 0.15 wt%, at least 0.2 wt%, at least 0.25 wt%, or even at least 0.3 wt%. High levels of pea protein are best avoided since they are associated with undesirable flavour notes. Thus the frozen confection preferably comprises pea protein in an amount of no more than 5 wt%, no more than 2 wt%, no more than 1.5 wt%, no more than 1 wt%, or even no more than 0.5 wt%.

The addition of fava bean protein to frozen confections comprising pea protein can result in the frozen confections being perceived as being creamier. The frozen confection preferably comprises fava bean protein in an amount of at least 0.15 wt%, at least 0.2 wt%, at least 0.25 wt%, or even at least 0.3 wt%. However, there is also the potential for frozen confections comprising fava bean protein to be perceived as having increased iciness. Thus, the frozen confection preferably comprises fava bean protein in an amount of no more than 5 wt%, no more than 2 wt%, no more than 1.5 wt%, no more than 1 wt%, or even no more than 0.5 wt%.

The frozen confection will typically comprise oat protein (***P3***) in addition to the pea protein (***P1***) and the fava bean protein (***P2***). Where present, the oat protein (***P3***) contributes to the total amount of plant protein in the frozen confection, and is typically present in an amount that is less than or equal to the combined amount of pea protein and fava bean protein (***P1** + **P2***)*.* It is preferred that the frozen confection comprises oat protein (***P3***) in an amount of at least 0.15 wt%, at least 0.2 wt%, at least 0.25 wt%, or even at least 0.3 wt%. Furthermore, the frozen confection preferably comprises oat protein (***P3***) in an amount of no more than 2 wt%, no more than 1.5 wt%, no more than 1 wt%, or even no more than 0.5 wt%.

The frozen confection comprises solids from oat material in an amount of 0.5 to 12 wt%. The solids from oat material comprise at least one of: oat protein (***P3***), fat, carbohydrate, and fibre. Preferably the solids from oat material comprise at least two of oat protein (***P3***)*,* fat, carbohydrate, and fibre; at least three of oat protein (***P3***)*,* fat, carbohydrate, and fibre. Most preferably the solids from oat material comprise oat protein (***P3***), fat, carbohydrate, and fibre. The oat material is preferably selected from: oat base, oat milk, oat syrup, and combinations of one or more thereof.

The solids from oat material preferably comprise oat protein (***P3***) in an amount of at least 1 wt%, at least 2 wt%, or even at least 3 wt% by weight of the solids. The solids from oat material may comprise oat protein (***P3***) in an amount of up to 55 wt%, and preferably comprise oat protein (***P3***) in an amount of up to 20 wt%, up to 15 wt%, or even up to 12 wt% by weight of the solids. The solids from oat material may comprise fat in an amount of up to 20 wt%, and preferably comprise fat in an amount of 1 to 8 wt%, or even 2 to 7 wt% by weight of the solids. The solids from oat material preferably comprise carbohydrate in an amount of at least 15 wt%, at least 30 wt%, at least 45 wt%, or even at least 60 wt%. The solids from oat material preferably comprise carbohydrate in an amount of up to 90 wt%, up to 88 wt%, or even up to 86 wt% by weight of the solids. The carbohydrate is typically a combination of sugars and starches (encompassing mono-, di-, oligo-, and polysaccharides). The solids from oat material preferably comprise fibre in an amount of at least 0.5 wt%, at least 1 wt%, or even at least 1.5 wt% by weight of the solids. The solids from oat material preferably comprise fibre in an amount of up to 15 wt%, up to 12 wt%, or even up to 10 wt% by weight of the solids.

It is particularly preferred that the solids from oat material comprise (by weight of the solids):
- oat protein (***P3***) in an amount of 0.5 to 15 wt%;
- fat in an amount of 1 to 8 wt%;
- carbohydrate in an amount of 60 to 90 wt%; and
- fibre in an amount of 0.5 to 12 wt%.

The frozen confection comprises solids from oat material in an amount of 0.5 to 12 wt%. Preferably the frozen confection comprises the oat material in an amount of at least 1 wt%, at least 1.5 wt%, or even at least 2 wt %. Preferably the frozen confection comprises solids from oat material in an amount of no more than 10 wt%, no more than 8 wt%, or even no more than 6 wt%.

The frozen confection preferably comprises oat protein (***P3***) in an amount such that the weight ratio of oat protein (***P3***) to the combined amount of pea protein and fava bean protein (***P3: P1 + P2***) is 1:1 to 1:8, 1:1 to 1:6, or even 1:1 to 1:4. Preferably, the pea protein (***P1***) and the oat protein (***P3***) are present in a weight ratio (***P1 : P3***) of 2:1 to 1:2. Preferably the fava bean protein (***P2***) and the oat protein (***P3***) are present in a weight ratio (***P2 : P3***) of 2:1 to 1:2.

Oat β-glucan, the main soluble fibre found in oats, has been reported to have cholesterol-lowering effects (see, for example, Whiteheat A, et al. (2014) Am J Clin Nutr 100:1413-21). The frozen confection preferably comprises oat β-glucan in an amount of 0.15 to 2 wt%, or even 0.2 to 1.5 wt%. The oat β-glucan is preferably provided by the oat material. In other words, the solids from oat material preferably comprise oat β-glucan.

Since the frozen confection is a plant-based frozen confection, it is preferred that the frozen confection is substantially free of dairy ingredients including milk protein. As used herein "substantially free of" means that the frozen confection comprises the ingredient in question in an amount of less than 0.1 wt%, preferably less than 0.05 wt%, more preferably less than 0.01 wt%.

The frozen confection comprises fat in an amount of 1 wt% to 15 wt%, and preferably in an amount of from 2 wt% to 12 wt%, 3 wt% to 10 wt%, or even from 4 wt% to 8 wt%. The fat is preferably vegetable fat (such as coconut oil, palm oil, palm kernel oil, or a mixture thereof), and it is particularly preferred that the fat is coconut oil. Furthermore, any fat provided as part of the solids from oat material will also contribute to the amount of fat in the frozen confection.

The frozen confection comprises sugars in an amount of 10 wt% to 30 wt%. Sugars are used in almost all types of frozen confection and have two major functions: delivering sweetness and controlling the amount of ice. As used herein the term "sugars" includes monosaccharides, disaccharides and oligosaccharides (which are formed from 3 to 10 monosaccharide units). Monosaccharides include glucose, fructose, galactose and mannose. Disaccharides include sucrose, lactose and trehalose. Oligosaccharides include raffinose. The term "sugars" does not include polysaccharides, which comprise >10 monosaccharides. Some ingredients commonly included in frozen confections may contribute to the amount of sugars. An example is corn syrup (sometimes called glucose syrup) - which is a mixture of monosaccharides, disaccharides and oligosaccharides.

Furthermore, any sugars provided as part of the solids from oat material will also contribute to the amount of sugars in the frozen confection.

High concentrations of sugars may contribute unwanted sweetness and or calories to the frozen confection. Therefore, the amount of sugars in the frozen confection is no more than 30 wt%, preferably no more than 28 wt%, no more than 25 wt%, or no more than 22 wt%. Conversely, low concentrations of sugars may be inappropriate if the frozen confection is a scoopable product, since a low concentration of sugars tend to result in frozen confections with a high ice content. Therefore, the amount of sugars in the frozen confection is at least 10 wt%, preferably at least 12 wt%, at least 15 wt%, or at least 20 wt%.

The frozen confection may additionally comprise nut solids, preferably in an amount of 1 wt% to 8 wt%, 1.5 wt% to 5 wt%, or even 2 wt% to 4 wt%. Preferred sources of nut solids include almonds, cashews, coconuts, pecans, macadamia nuts, brazil nuts, hazelnuts, pistachios, and mixtures thereof. Almond or coconut solids are preferred. Where present, the nut solids are preferably added in the form of nut paste or nut butter.

The frozen confection may optionally comprise an emulsifier or a mixture of emulsifiers (such as mono-diglycerides and the like). For example, the frozen confection may comprise emulsifier in an amount of 0.05 wt% to 1 wt%, 0.1 wt% to 0.8 wt%, or 0.2 wt% to 0.5 wt%. However, the inclusion of oat material in the frozen confection means that an emulsifier is an optional ingredient, and the frozen confections have good structural and textural properties even without the addition of an emulsifier. Thus, the frozen confection preferably does not comprise an emulsifier.

The frozen confection typically comprises at least one stabilizer, which is preferably selected from the group consisting of locust bean gum, xanthan gum, guar gum, carrageenan, tara gum, and mixtures thereof (for example, a mixture of locust bean gum and guar gum). The amount of stabilizer in the frozen confection is preferably 0.05 wt% to 1 wt%, 0.1 wt% to 0.8 wt%, or 0.2 wt% to 0.5 wt%.

The frozen confection may optionally comprise non-nutritive sweetener, such as aspartame, acesulfame K, erythritol, sucralose, or one or more steviol glycosides such as rebaudioside A. Mixtures of two or more non-nutritive sweeteners may also be used.

The frozen confection may optionally comprise colours and/or flavours.

The frozen confection is preferably aerated. As used herein the term "aerated" means that the confection has an overrun of at least 30%. Preferably the frozen confection has an overrun of 30% to 120%, or even 30% to 100%. Overrun (with unit "%") is defined by the following equation: $overrun = \frac{volume of aerated product - volume of initial mix}{Volume of initial mix} \times 100 %$

Overrun is measured at ambient temperature (20°C) and atmospheric pressure.

The frozen confection may optionally comprise further components, which include but are not limited to: inclusions, sauces, and/or toppings.

The frozen confections of the present invention can be manufactured by any suitable method. The frozen confection is typically made by freezing a premix (preferably a pasteurised premix) of ingredients such as water, fat, freezing point depressant, plant protein (comprising the pea protein and fava bean protein), oat material, and optionally other ingredients such as emulsifiers, stabilizers, colours and flavours. Further components (where present) are usually added after the premix has been frozen.

Numerical ranges expressed in the format "from x to y" are understood to include x and y, and in specifying any range of values or amounts, any particular upper value or amount can be associated with any particular lower value or amount. Unless otherwise specified, wt% refers to weight percent based on the weight of the entire formulation (including water).

Except in the examples and comparative experiments, or where otherwise explicitly indicated, all numbers are to be understood as modified by the word "about". As used herein, the indefinite article "a" or "an" and its corresponding definite article "the" means at least one, or one or more, unless specified otherwise.

### Examples

The examples are intended to illustrate the invention and are not intended to limit the invention to those examples *per se.*

### Example 1

Plant-based frozen confection formulations were made according to the formulations in Table 1. Samples A and B contained pea protein. The specified protein level (P1) is the amount of protein provided by the pea protein source (80% protein content). The sugars were a combination of sucrose, fructose and corn syrup.

**Table 1: plant-based frozen confection formulations**

| **Ingredient (wt%)** | **Sample** | |
|---|---|---|
| | **A** | **B** |
| Coconut oil | 6.5 | 5 |
| Pea protein source | 1.5 | 1.2 |
| Sugars | 23.5 | 22 |
| Emulsifier | 0.4 | 0.1 |
| Stabilizer | 0.3 | 0.3 |
| Cocoa powder | 3 | 4 |
| Almond paste | 2 | - |
| Water | to 100 | to 100 |
| Pea protein (***P1***) | 1.2 | 0.96 |

Briefly, the ingredients (excluding coconut oil) were combined and mixed with heating (60°C to 75°C), followed by addition of the coconut oil and further mixing. The mixes were pasteurised and homogenised, and then aged for 24 hours at 4°C.

Samples A and B exhibited significant mix thickening, and were judged to be too viscous for successful large-scale manufacture of frozen confection in a factory.

### Example 2

Plant-based frozen confection formulations were made according to the formulations in Table 2. Sample C contained pea protein, and Samples 1 to 3 contained a combination of pea protein and fava bean protein. The specified first protein level (***P1***) is the amount of protein provided by the pea protein source (80% protein content), and the specified second protein level (***P2***) is the amount of protein provided by the fava bean protein source (60% protein content). The oat material was either oat base (Samples 1 and 3) or oat syrup (Sample 2). Oat base (96% solids) was purchased from SunOpta. Oat syrup (70% solids) was purchased from Döehler. Both the oat base and the oat syrup contained oat protein (***P3***), fat, carbohydrate, and fibre.

Briefly, the ingredients (excluding coconut oil) were combined and mixed with heating (60°C to 75°C), followed by addition of the coconut oil and further mixing. The mixes were pasteurised and homogenised, and then aged for 24 hours at 4°C. After the ageing step, the mixes were aerated in a scraped surface heat exchanger (standard ice cream freezer). The air input was controlled to give a target overrun of 35 to 100%, and freezing was controlled to give a target extrusion temperature of -4.5°C.

**Table 2: plant-based frozen confection formulations**

| **Ingredient (wt%)** | **Sample** | | | |
|---|---|---|---|---|
| | **C** | **1** | **2** | **3** |
| Coconut oil | 8.1 | 8 | 8 | 7 |
| Pea protein source | 1 | 0.38 | 0.38 | 0.4 |
| Fava bean protein source | - | 0.5 | 0.5 | 0.6 |
| Oat material | - | 5.5 | 7.85 | 1 |
| Sucrose + glucose syrup (DE28) | 26.7 | 23 | 24 | 28.2 |
| Emulsifier | 0.5 | - | - | - |
| Stabilizer | 0.2 | 0.2 | 0.2 | 0.2 |
| Colours/flavours | 4 | - | - | 0.1 |
| Water | to 100 | to 100 | to 100 | to 100 |
| Total sugars | 18 | 17.9 | 17.3 | 17.9 |
| Total fat | 10.7 | 8.4 | 8.3 | 7.1 |
| Pea protein (***P1***) | 0.8 | 0.3 | 0.3 | 0.32 |
| Fava bean protein (***P2***) | - | 0.3 | 0.3 | 0.36 |
| Oat protein (***P3***) | - | 0.55 | 0.35 | 0.1 |
| ***P1* : *P2*** | N/A | 1 : 1 | 1 : 1 | 1 : 1.13 |

A further frozen confection (Sample D) comprising 0.48 wt% pea protein and 0.32 wt% fava bean protein was prepared in a similar manner (Sample D; ***P1** : **P2*** = 1.5:1). A panel of tasters assessed the frozen confection, which was found to have acceptable sensory properties. In particular, Sample D was judged to have significantly less of the off-flavours typically associated with plant proteins than a control sample (0.8 wt% pea protein).

The sensory properties of the samples comprising oat material in addition to pea protein (***P1***) and fava bean protein (***P2***) were also found to have a significant reduction in off-flavours. Furthermore, these samples were perceived as having improved textural properties, in particular with regards to creaminess.

Thus, the samples with a combination of pea protein and fava bean protein have improved sensory properties compared to the sample with pea protein alone, and the inclusion of oat material further improves the textural properties of the samples. Furthermore, the desirable sensorial properties of the samples comprising oat material were achieved without the addition of an emulsifier.

## Claims

1. Plant-based frozen confection comprising:
• fat in an amount of 1 to 15 wt%;
• sugars in an amount of 10 to 30 wt%;
• solids from oat material in an amount of 0.5 to 12 wt%; and
• plant protein in an amount of 0.4 to 10 wt%,
wherein the solids from oat material comprise one or more of: oat protein (***P3***), fat, carbohydrate, and/or fibre; and
wherein the plant protein comprises pea protein (***P1***) and fava bean protein (***P2***) in a weight ratio (***P1 : P2***) of 2:1 to 1:2.

2. Plant-based frozen confection as claimed in claim 1, wherein the solids from oat material are provided by an oat material selected from oat base, oat milk, oat syrup, and combinations of one or more thereof.

3. Plant-based frozen confection as claimed in claim 1 or claim 2 comprising solids from oat material in an amount of 2.5 to 10 wt%.

4. Plant-based frozen confection as claimed in any one of claims 1 to 3, wherein the plant protein comprises oat protein (***P3***) in an amount that is less than or equal to the combined amount of pea protein and fava bean protein (***P1* + *P2***)*.*

5. Plant-based frozen confection as claimed in any one of claims 1 to 4, wherein the frozen confection has an overrun of 30% to 120%.

6. Plant-based frozen confection as claimed in any one of claims 1 to 5, wherein the frozen confection comprises plant protein in an amount of 0.5 to 6 wt%.

7. Plant-based frozen confection as claimed in any one of claims 1 to 6, wherein the frozen confection comprises fat in an amount of 3 to 10 wt%.

8. Plant-based frozen confection as claimed in any one of claims 1 to 7, wherein the frozen confection comprises the pea protein (***P1***) in an amount of 0.15 to 2 wt%.

9. Plant-based frozen confection as claimed in any one of claims 1 to 8, wherein the frozen confection comprises the fava bean protein (***P2***) in an amount of 0.15 to 2 wt%.

10. Plant-based frozen confection as claimed in any one of claims 1 to 9, wherein the solids from oat material comprises (by dry weight of the solids):
• oat protein (***P3***) in an amount of 0.5 to 15 wt%;
• fat in an amount of 1 to 8 wt%;
• carbohydrate in an amount of 60 to 90 wt%; and
• fibre in an amount of 0.5 to 12 wt%.

11. Plant-based frozen confection as claimed in any one of claims 1 to 10 comprising oat β-glucan in an amount of 0.15 to 2 wt%.

12. Plant-based frozen confection as claimed in any one of claims 1 to 11, wherein the frozen confection comprises oat protein (***P3***) in an amount of 0.15 to 2 wt%.

13. Plant-based frozen confection as claimed in any one of claims 1 to 12, wherein the frozen confection comprises oat protein (***P3***), and the weight ratio of oat protein to the combined amount of pea protein and fava bean protein (***P3 : P1 + P2***) is 1:1 to 1:8.

14. Plant-based frozen confection as claimed in claim 1 or claim 2, wherein the frozen confection comprises oat protein (***P3***)*,* and the pea protein (***P1***) and the oat protein (***P3***) are present in a weight ratio (***P1 : P3***) of 2:1 to 1:2

15. Plant-based frozen confection as claimed in any one of claims 1 to 3, wherein the frozen confection comprises oat protein (***P3***), and the fava bean protein (***P2***) and the oat protein (***P3***) are present in a weight ratio (***P2 : P3***) of 2:1 to 1:2.

## Patentansprüche

1. Pflanzenbasiertes gefrorenes Konfekt, umfassend:
• Fett in einer Menge von 1 bis 15 Gew.-%;
• Zucker in einer Menge von 10 bis 30 Gew.-%;
• Feststoffe aus Hafermaterial in einer Menge von 0,5 bis 12 Gew.-%; und
• pflanzliches Protein in einer Menge von 0,4 bis 10 Gew.-%,
wobei die Feststoffe aus Hafermaterial eines oder mehrere von: Haferprotein (***P3***), Fett, Kohlenhydrate und/oder Ballaststoffe umfassen; und
wobei das Pflanzenprotein Erbsenprotein (***P1***) und Ackerbohnenprotein (***P2***) in einem Gewichtsverhältnis (***P1*** : ***P2***) von 2 : 1 bis 1 : 2 umfasst.

2. Pflanzenbasiertes gefrorenes Konfekt nach Anspruch 1, wobei die Feststoffe aus Hafermaterial durch ein Hafermaterial bereitgestellt sind, ausgewählt aus Haferbasis, Hafermilch, Hafersirup und Kombinationen von einem oder mehreren davon.

3. Pflanzenbasiertes gefrorenes Konfekt nach Anspruch 1 oder Anspruch 2, umfassend Feststoffe aus Hafermaterial in einer Menge von 2,5 bis 10 Gew.-%.

4. Pflanzenbasiertes gefrorenes Konfekt nach einem der Ansprüche 1 bis 3, wobei das Pflanzenprotein Haferprotein (***P3***) in einer Menge umfasst, die kleiner oder gleich der kombinierten Menge von Erbsenprotein und Ackerbohnenprotein (***P1 + P2***) ist.

5. Pflanzenbasiertes gefrorenes Konfekt nach einem der Ansprüche 1 bis 4, wobei das gefrorene Konfekt einen Overrun von 30 % bis 120 % aufweist.

6. Pflanzenbasiertes gefrorenes Konfekt nach einem der Ansprüche 1 bis 5, wobei das gefrorene Konfekt Pflanzenprotein in einer Menge von 0,5 bis 6 Gew.-% umfasst.

7. Pflanzenbasiertes gefrorenes Konfekt nach einem der Ansprüche 1 bis 6, wobei das gefrorene Konfekt Fett in einer Menge von 3 bis 10 Gew.-% umfasst.

8. Pflanzenbasiertes gefrorenes Konfekt nach einem der Ansprüche 1 bis 7, wobei das gefrorene Konfekt das Erbsenprotein (***P1***) in einer Menge von 0,15 bis 2 Gew.-% umfasst.

9. Pflanzenbasiertes gefrorenes Konfekt nach einem der Ansprüche 1 bis 8, wobei das gefrorene Konfekt das Ackerbohnenprotein (***P2***) in einer Menge von 0,15 bis 2 Gew.-% umfasst.

10. Pflanzenbasiertes gefrorenes Konfekt nach einem der Ansprüche 1 bis 9, wobei die Feststoffe aus Hafermaterial (bezogen auf das Trockengewicht der Feststoffe) umfassen:
• Haferprotein (***P3***) in einer Menge von 0,5 bis 15 Gew.-%;
• Fett in einer Menge von 1 bis 8 Gew.-%;
• Kohlenhydrate in einer Menge von 60 bis 90 Gew.-%; und
• Ballaststoffe in einer Menge von 0,5 bis 12 Gew.-%.

11. Pflanzenbasiertes gefrorenes Konfekt nach einem der Ansprüche 1 bis 10, umfassend Hafer-β-Glucan in einer Menge von 0,15 bis 2 Gew.-%.

12. Pflanzenbasiertes gefrorenes Konfekt nach einem der Ansprüche 1 bis 11, wobei das gefrorene Konfekt Haferprotein (***P3***) in einer Menge von 0,15 bis 2 Gew.-% umfasst.

13. Pflanzenbasiertes gefrorenes Konfekt nach einem der Ansprüche 1 bis 12, wobei das gefrorene Konfekt Haferprotein (***P3***) umfasst und das Gewichtsverhältnis von Haferprotein zu der kombinierten Menge an Erbsenprotein und Ackerbohnenprotein (***P3*** : ***P1 + P2***) 1 : 1 bis 1 : 8 beträgt.

14. Pflanzenbasiertes gefrorenes Konfekt nach Anspruch 1 oder Anspruch 2, wobei das gefrorene Konfekt Haferprotein (***P3***) umfasst und das Erbsenprotein (***P1***) und das Haferprotein (***P3***) in einem Gewichtsverhältnis (***P1*** : ***P3***) von 2 : 1 bis 1 : 2 vorliegen.

15. Pflanzenbasiertes gefrorenes Konfekt nach einem der Ansprüche 1 bis 3, wobei das gefrorene Konfekt Haferprotein (***P3***) umfasst und das Ackerbohnenprotein (***P2***) und das Haferprotein (***P3***) in einem Gewichtsverhältnis (***P2 : P3***) von 2 : 1 bis 1 : 2 vorliegen.

## Revendications

1. Confiserie glacée à base végétale comprenant :
• de la matière grasse en une quantité de 1 à 15 % en poids ;
• des sucres en une quantité de 10 à 30 % en poids ;
• de la matière sèche issue de matière à base d'avoine en une quantité de 0,5 à 12 % en poids ; et
• une protéine végétale en une quantité de 0,4 à 10 % en poids,
dans laquelle la matière sèche issue de matière à base d'avoine comprend un ou plusieurs parmi : la protéine d'avoine (***P3***), une matière grasse, un glucide, et/ou une fibre ; et
dans laquelle la protéine végétale comprend de la protéine de pois (***P1***) et de la protéine de féverole (***P2***) selon un rapport en poids (***P1 : P2***) entre 2:1 et 1:2.

2. Confiserie glacée à base végétale selon la revendication 1, dans laquelle les matières sèches issues de matière à base d'avoine sont fournies par une matière à base d'avoine choisie parmi une base d'avoine, un lait d'avoine, un sirop d'avoine, et des combinaisons d'un ou de plusieurs de ceux-ci.

3. Confiserie glacée à base végétale selon la revendication 1 ou la revendication 2 comprenant de la matière sèche issue de matière à base d'avoine en une quantité de 2,5 à 10 % en poids.

4. Confiserie glacée à base végétale selon l'une quelconque des revendications 1 à 3, dans laquelle la protéine végétale comprend de la protéine d'avoine (***P3***) en une quantité qui est inférieure ou égale à la quantité combinée de protéine de pois et de protéine de féverole (***P1 + P2***).

5. Confiserie glacée à base végétale selon l'une quelconque des revendications 1 à 4, dans laquelle la confiserie glacée a un foisonnement de 30 % à 120 %.

6. Confiserie glacée à base végétale selon l'une quelconque des revendications 1 à 5, dans laquelle la confiserie glacée comprend des protéines végétales en une quantité de 0,5 à 6 % en poids.

7. Confiserie glacée à base végétale selon l'une quelconque des revendications 1 à 6, dans laquelle la confiserie glacée comprend de la matière grasse en une quantité de 3 à 10 % en poids.

8. Confiserie glacée à base végétale selon l'une quelconque des revendications 1 à 7, dans laquelle la confiserie glacée comprend la protéine de pois (***P1***) en une quantité de 0,15 à 2 % en poids.

9. Confiserie glacée à base végétale selon l'une quelconque des revendications 1 à 8, dans laquelle la confiserie glacée comprend la protéine de féverole (***P2***) en une quantité de 0,15 à 2 % en poids.

10. Confiserie glacée à base végétale selon l'une quelconque des revendications 1 à 9, dans laquelle la matière sèche issue de matière à bras d'avoine comprend (en poids sec de la matière sèche) :
• la protéine d'avoine (***P3***) en une quantité de 0,5 à 15 % en poids ;
• de la matière grasse en une quantité de 1 à 8 % en poids ;
• un glucide en une quantité de 60 à 90 % en poids ; et
• une fibre en une quantité de 0,5 à 12 % en poids.

11. Confiserie glacée à base végétale selon l'une quelconque des revendications 1 à 10 comprenant du β-glucane d'avoine en une quantité de 0,15 à 2 % en poids.

12. Confiserie glacée à base végétale selon l'une quelconque des revendications 1 à 11, dans laquelle la confiserie glacée comprend de la protéine d'avoine (***P3***) en une quantité de 0,15 à 2 % en poids.

13. Confiserie glacée à base végétale selon l'une quelconque des revendications 1 à 12, dans laquelle la confiserie glacée comprend de la protéine d'avoine (***P3***), et le rapport en poids entre la protéine d'avoine et la quantité combinée de protéine de pois et de protéine de féverole (***P3 : P1 + P2***) est de 1:1 à 1:8.

14. Confiserie glacée à base végétale selon la revendication 1 ou la revendication 2, dans laquelle la confiserie glacée comprend de la protéine d'avoine (***P3***), et la protéine de pois (***P1***) et la protéine d'avoine (***P3***) sont présentes selon un rapport en poids (***P1 : P3***) entre 2:1 et 1:2

15. Confiserie glacée à base végétale selon l'une quelconque des revendications 1 à 3, dans laquelle la confiserie glacée comprend de la protéine d'avoine (***P3***), et la protéine de féverole (***P2***) et la protéine d'avoine (***P3***) sont présentes selon un rapport en poids (***P2 : P3***) entre 2:1 et 1:2.
